# EUROPEAN PATENT APPLICATION

(11) **EP 1 583 015 A1**
(43) Date of publication of application: **05.10.2005**
(21) Application number: 05102488.3
(22) Date of filing: 30.03.2005
(51) Int. Cl.: G06F 17/60

(54) **Method and arrangement for managing logistic flows**

(30) Priority: 30.03.2004 FI 20040470
(71) Applicant: TAMTRON OY, SF-33730 Tampere (FI)
(72) Inventor: ASIKAINEN, Pentti, FI-35800, MÄNTTÄ (FI)
(74) Representative: Brax, Matti Juhani

(57) **Abstract**

The invention relates to a method and arrangement for managing logistic flows. In particular, the invention relates to a method and arrangement for managing goods transport by means of data communications. The object of the invention is a dynamic management of vehicle inventories and assignments, particularly the controlling and managing of logistics by means of RFID tags, so that for the vehicle drivers, there are composed optimized routes based on the overall situation and/or driving instructions that are transmitted directly to the vehicle and/or to the driver. The methods and devices according to the invention enable a dynamic management and controlling of the logistics of goods transport at each point of time, based on real-time data of the goods to be transported as well as on data connected to the transport route. The method and arrangement according to the invention enable the transport operations to react rapidly to external changes by means of operational instructions, for example by giving driving instructions or by suggesting a driving route.

## Description

### Field of the invention

The invention relates to a method and arrangement for managing logistic flows. In particular, the invention relates to a method and arrangement for managing the transport of goods by means of data transmission.

### Description of the prior art

At present, logistic flows are immense, as huge numbers of goods and people are daily transported from one location to another. Especially in the transportation of goods, the inventory and transport management, also including the control and monitoring of transport, is therefore an important field of the art. There are suggested management arrangements where an RFID (Radio Frequency Identification) tag is attached to the goods, said tag comprising a memory in which it is possible to read and write at radio frequencies. On the basis of the RFID tag, the goods can then be traced, if necessary.

The management of inventory in a truck in connection with the loading and unloading of goods by means of RFID tags is known from the publication WO 02/061657 A1. From the same publication, there also is known the recording of various properties, such as the transport position, temperature etc. in the RFID tag.

The publication US 2003/0183697 A1 introduces a system where the RFID and a "head-end unit" can communicate and exchange information for slowing down a train in a coordinated way also in the carriages.

The publication US 6,450,411 B1 describes how the conditions in a vehicle, such as air conditioning and temperature, are managed by means of RFID.

The publications WO 00184506 and US 6,687,609 in turn introduce several different systems by which the operation of several different transport vehicles can be optimized by information technology, when the location of the vehicle is known.

In addition, the publication US 2002/0089434 illustrates how an inventory, combined by RFID, relating to people and goods transported in a vehicle can be communicated by radio to a PC.

However, there are many drawbacks connected to the prior art. The data generated by RFID is mainly utilized for collecting history data of the goods to be transported, and on the basis of said history data, for example a company managing trucks can later improve its operation sometimes later, as is illustrated in the publication WO 00184506A2. Naturally there is a high demand in the market to obtain said collected data more rapidly to practical use, to be utilized in making transportation more effective. In addition, the share of the own risk of the manufacturer, the transport company, and the loading and selling parties is continuously growing, which means that the operating parties must follow the goods flows and the factors connected thereto. For controlling said own risk share and for obtaining the necessary reports, an effective system is needed.

### Summary of the invention

The object of the invention is a system and method by which data connected to goods to be transported, collected by RFID, can, apart from position data, be used for real-time logistic management. The object of the invention is that at least the driver of each transport vehicle is aware of the actual situation-specific and driving instructions at hand for effectively realizing the overall deliveries. Another object of the invention is to improve the packing of goods in a functional and safe fashion.

In a preferred embodiment of the invention, in the cargo space of a transport vehicle, there are loaded goods, for instance boxes where items are packed. RFID tags are attached to the goods or to the boxes thereof. When the goods from the load are delivered by the vehicle and the load is unloaded and loaded, the outgoing load is read by means of RFID tags, as well as the incoming load. Thus, when both the loaded and unloaded goods are known, after the stop the data connected to the goods to be transported in the new load can be updated on the basis of the data read from RFID. In that case, the vehicle is typically provided with a RFID reader and/or writer, an electronic device, by means of which, by signals transmitted through the radio, it is possible to read and write data in the memory of the RFID tags. The RFID reader and/or writer can be a portable device or a device attached to the cargo department. Thus the inventory, or rather the data connected to the goods to be transported, is obtained in electronic form, for example as a computer file or in an otherwise computerized form.

On the basis of said data connected to the goods to be transported, the location of the vehicle and the existing delivery assignments to be carried out in the future, an optimal route can be planned for the vehicle, which generally means a route causing the lowest monetary expenses or taking the least amount of time. Said route can be calculated automatically and displayed to the driver on the vehicle device. Thus the driver need not make calculations and estimations that are susceptible to errors, but instead he can concentrate on driving and on fulfilling his assignments.

In an embodiment of the invention, when necessary, data is collected in a central server, which in addition to the server features also includes, among others, the reception of orders, driving management programs, invoicing, reporting etc., and route calculations are made in the central server, from where they are further transmitted to those vehicles that are related to said calculations.

The method for managing logistics in a goods transport network, including the driver's vehicle device, at least one RFID tag, at least one RFID reader and/or writer, is characterized in that
- at least one RFID tag is connected to at least one item to be transported,
- there is formed real-time data connected to the goods to be transported and to their destinations by reading and/or writing the RFID tags of the goods to be transported,
- on the basis of said data connected to the goods to be transported, the location and the destinations of the goods, there is planned a driving route for the driver, which route is then displayed on the vehicle device.

The arrangement for managing logistics in a goods transport network, including a vehicle device for the driver of the transport vehicle, at least one RFID tag, at least one RFID reader and/or writer, is characterized in that
- at least one RFID tag is connected to at least one item to be transported,
- the arrangement comprises means for reading and/or writing the RFID tags of the goods to be transported, as well as means for generating real-time data connected to the goods to be transported and to their destinations,
- on the basis of said data connected to the goods to be transported, the location and to the destinations of the goods, the arrangement comprises means for planning a route for the driver, which route is arranged to be displayed on the vehicle device.

For the sake of clarity, let us point out that in this application, an "RFID tag" means any device containing memory, which memory can be read and/or in which memory data can be written by radio signal communication. An "RFID reader/writer" means a device that is able to read and/or write in said RFID tags by signals transmitted through the radio. The reader/writer can be connected by wires to the vehicle device and/or to the central system. Preferably the reader/writer is in wireless data transmission connection with the vehicle device, in which case cumbersome cable installations are avoided, the readers are protected against impacts and when necessary, hidden from anybody who would want to break them. Wireless data transmission is particularly advantageous when the reader/writer is located in a trailer, container or train car, and respectively the vehicle device is placed in a tractor car or engine. The data transmission connection between the central system and the vehicle device is preferably wireless.

In addition, let us point out that the term inventory used in this document includes, from the point of view of the goods logistics, essentially everything connected to logistic control and goods monitoring. Let us further point out that although the device typically referred to in this document is the RFID reader, from the document it is obvious that said reader may also include a writer function (RFID writer), even if it is not always mentioned in order to make the text more readable.

The method and arrangement according to the invention enables a dynamic management of the logistics of goods transport at each point of time, based on real-time inventory data. The method and arrangement according to the invention measures the situation of the overall logistics and translates each transport situation to optimized overall instructions that can be executed immediately. The method and arrangement according to the invention makes it possible that transport operations can react rapidly to external changes by means of concrete operational instructions, for instance by driving instructions or by suggesting a driving route.

According to an embodiment of the invention, at least the most essential transport, transfer and loading equipment that the invention relates to is provided with RFID readers in order to achieve a comprehensive system. This is particularly advantageous, because generally in small enterprises, public service points or homes do not necessarily have readers, and on the other hand, widely used stationary reader gates or detachable readers are not practical, because it is necessary to drive through this kind of stationary reading gate, which means that it requires a given route for example to a loading machine. On the other hand, separate readers are easily broken and may also disappear, even in the hands of unauthorized persons. However, by means of the arrangement suggested here, the above mentioned drawbacks of the prior art can be eliminated. Moreover, by means of the arrangement described here, all data is collected where it should, and data can be transmitted for example to the storage, factory, invoicing, monitoring or other essential systems of customers, suppliers and supervising authorities. According to the invention, data transmission is preferably carried out by known wireless data transmission means.

What is more, according to an embodiment of the invention, RFID readers are provided with monitoring features for detecting vibration and/or motion. In that case the RFID readers may transmit the alarm data directly to the central system and/or they may start RFID reading (monitoring of the goods located in the space in question) and/or positioning automatically. As for the monitoring of the opening of doors, this enables controlling also in cases when a whole container, vehicle or train car is stolen or starts to move. Said system also detects situations where a container or the like is broken in some other place than at the door. According to an embodiment of the invention, wireless RFID readers include sensitive vibration sensors that detect vibration that is created, when somebody is trying to intrude to the container or to make a hole therein.

Moreover, in addition to the identification of goods, an embodiment of the invention also includes the identification of drivers, loaders and caretakers. By means of this embodiment, there is obtained data regarding the driver and his activities (working time, route, pauses), as well as data regarding the loaders. It is also important to make sure that only persons who are authorized to do the job can carry out the loading, unloading, transport, further treatment etc. According to said embodiment, drivers and loaders use RFID tags. According to an embodiment, the RFID tags are integrated for instance in their mobile stations, so that the essential data connected to the logistically essential tasks carried out by said person is recorded, in which case they can form part of for example invoicing, salary payment and self oriented monitoring. This embodiment of the invention can also be utilized when only authorized persons are entitled to perform loading, unloading and driving tasks. Moreover, if something out of the ordinary should happen, the facts connected to said event can be easily found, for example who carried out the loading, etc.

In cases where particular equipment, clothing or processing tools are required of the employees in the treatment of materials, the system of the present invention can also control that said requirements are fulfilled. In that case also the clothes, protective gear, shoes, tools and processing means are provided with RFID devices, and the system controls that they are appropriate by reading said devices and by comparing them to the data that defines what they should be. The system can also supervise how many times said equipment is used, in case it can only be used for a limited number of times, by recording data in some part of the system (tag, vehicle device, central system) or in an external system. In addition to the number of usage times, there can be recorded the point of time, condition or other corresponding pieces of information that are significant with respect to the usability of the equipment or clothing. Thus it can be verified who, and provided by what gear and tools, participated in the handling of a certain goods batch, which further improves traceability and safety. An alarm can take place for instance by means of a system sound signal, light signal, email or voice message. According to an embodiment, the alarm system forms part of the whole system for controlling and managing logistics according to the invention.

The invention also offers an economic way to trace goods, their movements and connected events. For example, if a batch is damaged, spoiled or broken, or if a batch must be returned for some other reason, said batch can be found, when also in connection with transportation there is collected data of the loading and unloading points, of the conditions and of the persons and factors that participated in the loading and/or transportation. The data is recorded in the vehicle device, in the central system, in the tags and/or in some other system. The customer, the supplier, the controlling organization or even the consumer can check the data in a shop, in a storage, at a checkpoint or even at home by reading the tag data, or alternatively by checking the facts in the data system. Thus the origin of the goods, as well as all the steps in the logistic chain of said goods, can be obtained and verified even in real-time.

In addition, according to an embodiment of the invention, the compatibility of the goods to be loaded is monitored. The system according to the invention is arranged to control that mutually incompatible goods are not loaded in the same transport vehicle. For example, the system does not allow foodstuffs and chemicals that are dangerous to humans to be packed in the same load space, but gives an alarm. Advantageously the vehicle device and/or the central system contains data telling what kind of goods are packed in the target included in each RFID tag. The system also includes a feature where the goods to be transported are arranged in mutually compatible groups. If the system detects that mutually incompatible goods are coming to the load space, the loader and/or driver receives an alarm to that effect, and possible damages can thus be avoided. The system can also be arranged so that unidentified goods are not received, and they always cause an alarm. In this way damages can be eliminated and intentional malicious damage prevented.

According to an embodiment, the central system, vehicle device and/or RFID reader mentioned in this patent document can be arranged to notify in real-time the receiver of the arrival or call for goods either in advance, at the actual moment or afterwards, for instance through the Internet, by email, mail, fax, mobile stations, SMS/MMS message or voice message. When the notice is given in real-time and dynamically, the receiver of the data can better make use of the situation and effectively carry out his own actions.

Further, by means of an arrangement according to the invention, based on a central system, the invoicing is automated by an embodiment of the invention, when there is obtained real-time knowledge as to what goods are transported, in which quantities, along which route, at which time, who carried out the loading and/or transport, etc. In similar fashion, also the driver's salary payment and various reports can be carried out. According to an embodiment of the invention, this can naturally be carried out also directly in the vehicle device.

According to the view of the applicant, the best embodiment of the invention is a modification of the dynamic management of vehicle inventories and assignments by using wireless data transmission technique, so that for the use of the vehicle drivers, there are composed optimized routes based on the overall situation, and/or driving instructions that are transmitted directly to the vehicle and/or to the driver.

### Description of the drawings

The invention is described in more detail with reference to exemplary embodiments and to the appended drawings, where
Figure 1 illustrates a method according to the invention for managing logistics, shown as a flow diagram;
Figure 2 illustrates a server computer type method according to the invention for managing logistics, shown as a flow diagram;
Figure 3 illustrates a server computer type method according to the invention for managing logistics, based on server-oriented query technique, shown as a flow diagram;
Figure 4 illustrates an arrangement according to the invention in a transport vehicle, shown as a block diagram;
Figure 5 illustrates a few embodiments according to the invention for goods transport tanks, and the use of RFID tags with the goods and their tanks, shown as a block diagram;
Figure 6 illustrates an arrangement according to the invention regarding the cooperation of the transport vehicle with the central server;
Figure 7 illustrates a vehicle device according to the invention, shown as a block diagram, and
Figure 8 illustrates a wireless vehicle device according to the invention and its cooperation with the rest of the logistics managing arrangement in the vehicle.

Some embodiments of the invention are described in the dependent claims.

### Detailed description of the invention with reference to embodiments

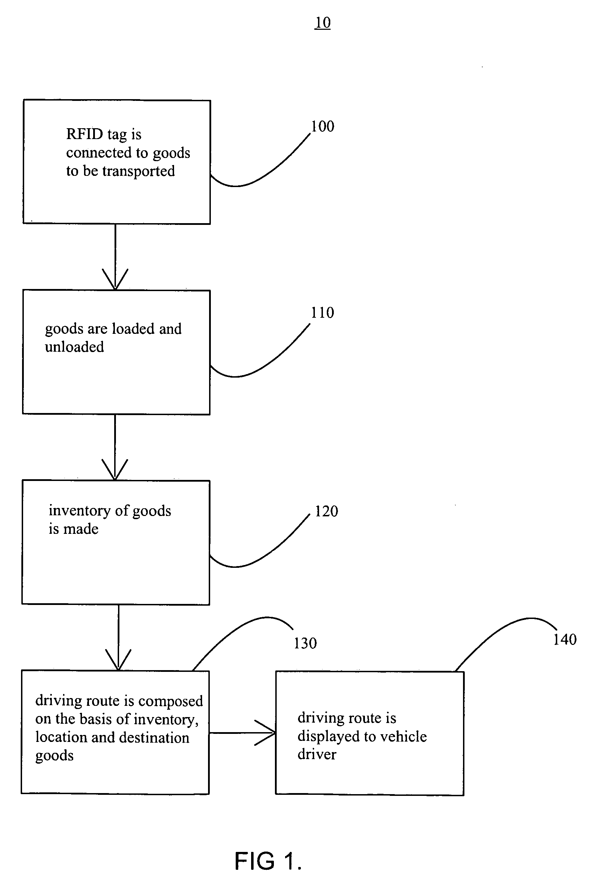

In step 100 of the method illustrated in figure 1, an RFID tag is connected to the goods to be transported. Preferably the connecting is carried out by fastening the tag mechanically directly to the goods, especially when the goods in question are solid goods. As an alternative, the tag is connected to the goods by fastening the tag to the transport vessel of the goods to be transported, such as a tank, so that the tag and the connected goods to be transported can be unambiguously associated.

Generally the RFID tag is realized as a fairly light-weight component that is sticker-like and can thus be simply attached to the goods to be transported. Also other fastening mechanisms, such as rivets, tapes, bands, nails, screws and adhesions are possible in the embodiments according to the invention. In step 110, goods are loaded and/or unloaded from the vehicle, in which case naturally part of the goods /items goes out of the vehicle and part goes into the vehicle. Those goods or items that are unloaded from the vehicle are identified by the respective RFID tags, typically by an RFID reader and/or writer that is a device used in the vehicle or with the driver. Those goods or items that arrive in the vehicle are likewise identified by the respective RFID tags of said goods, typically by an RFID reader and/or writer, by means of signals transmitted over the radio.

In step 120, there is made an inventory of the load of the vehicle, when the outgoing goods and/or items and the in packed goods and/or items are known. The RFID reader and/or writer can make an inventory according to the invention. In some embodiments, the RFID reader and/or writer is integrated in the vehicle device and/or the readers are connected by wires or by wireless connections to the vehicle device, which is at least partly based on for example a PC, Apple Macintosh, Unix or Linux computer and/or a mobile station, such as a mobile station compatible with GSM, GPRS, EDGE, WCDMA, CDMA, UMTS, TDMA, Bluetooth, Tetra, imode, WLAN, 3G, or 4G. In some embodiments it is likewise possible that the RFID reader and/or writer data is decoded in the vehicle device, mobile station or central server through a separate data transmission connection, which can be for instance a connection realized over the radio, such as a GSM, GPRS, EDGE, WCDMA, CDMA, UMTS, TDMA, Bluetooth, Tetra, imode, WLAN, 3G or 4G, or an infrared connection such as an IrDA connection, or a separate cable connection. Obviously the inventory must be defined either in the RFID reader and/or writer, in the mobile station, vehicle device or central server, either partly or completely in each of said devices.

In step 130, on the basis of the inventory, for example, a driving route is defined to the destination, assignments, assignments of goods to be called, and/or to the location of the goods included in the inventory. In some embodiments of the invention, also the destinations and/or places of departure of the goods can be obtained from the RFID tags, the vehicle device and/or the central server. In certain embodiments of the invention, the position is obtained by satellite measurements, for example by an GPS satellite. It also is possible to obtain the vehicle position through the cellular network, for instance so that the driver or the vehicle has a mobile station positioned by the base stations of the cellular network. Moreover, according to the invention it is possible that the driver simply informs the equipment as to the location of the vehicle, for example by feeding the address and/or the coordinates to the system, or by pointing out the position on an electric map.

According to the invention, the driving route is generally defined by selecting a route that causes the lowest monetary expenses or consumes least time, or results in the smallest quantity of driving kilometers. Other criteria can also be applied for selecting an optimal route, such as the data obtained from map material related to the road network, height differences, steepness and length of hills etc. Map and database materials include a large quantity of data regarding transport routes. In addition, the system can be arranged to utilize special digital maps, databases or earlier collected data as for the traveled routes and their conditions. In an embodiment according to the invention, certain transport batches may for example have higher priority. Higher priority transport batches can be for instance transportations of the driver's key customers, or urgent transportations and/or transportations for which the end customer has paid more or has agreed to pay more.

In step 140, the selected driving route is displayed to the driver. In some embodiments of the invention, the driver can view the route in the display of the vehicle device or the mobile station. Road-specific limits and existing traffic signs can also be displayed. They can be obtained, on the basis of position and map data, from the vehicle device and/or from the central server or, in the case of self-transmitting traffic signs, even directly from the traffic signs. In some more advanced embodiments of the invention, the route is displayed on a separate monitor on the vehicle dashboard, or the display is integrated in the vehicle windshield, or alternatively the data is projected on the vehicle windshield by some display element or projector. Thus the driver only needs to follow the optimal route, and the goods are delivered with maximum efficiency. Moreover, according to the invention it is possible that the vehicle is continuously displayed on the same map where the route is displayed. In certain embodiments, when deviating from the route, the system may give an alarm of the driver's mistake. In certain embodiments, the driver can also be shown a target timetable in connection with the route display.

Also other data can be recorded in the device, for example the distance traveled, as well as the loading/unloading point.

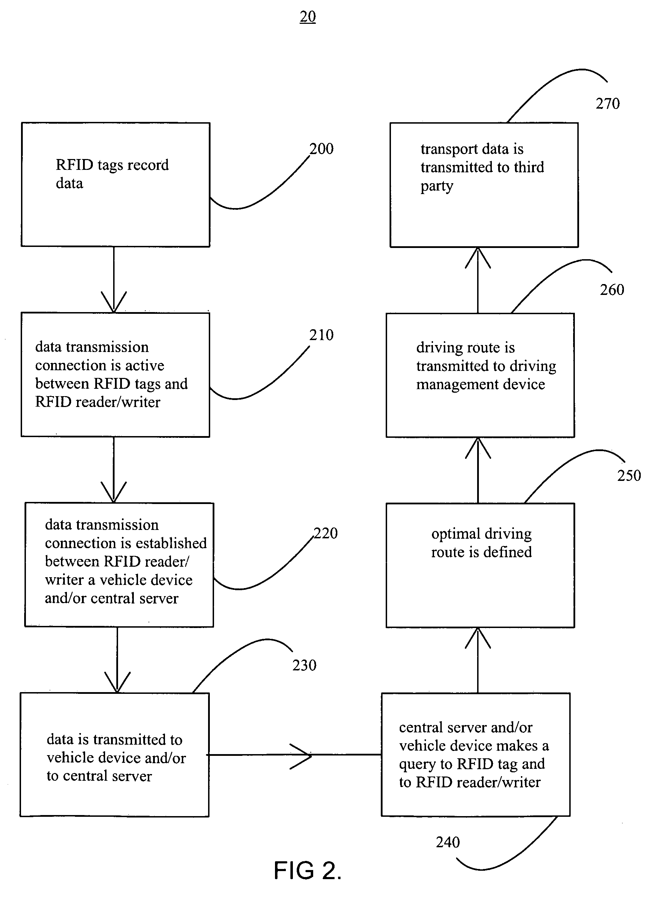

In step 200 of Figure 2, the RFID tags record data. This does not exclude the possibility that the RFID tag could contain stored data already before the new recording event. In certain embodiments, the RFID tag and/or reader and separate sensors also comprise a meter that measures a given physical variable or several different variables, and/or the RFID tag is in data transmission connection with one of said meters and records their measuring results according to the invention in its memory. The RFID tag can be active (the device includes a battery) or passive (the device does not have any source of energy). The devices can have different reading distances, and the connection can also be made by the tag itself, or the tag reader. In some embodiments, the RFID tags record for example data such as the weight of the respective goods, the pressure caused by other goods, interference, vibration, the state of the doors, humidity data, temperature data, location data in the load space, position in the load space, velocity, location data, operational history data and/or history data of the conditions of the goods. All data can also be recorded, either completely or partly, in the vehicle device and/or in the central server. The data is combined by reading the RFID tag and by combining thereto the data that is already stored in the RFID reader and/or in the vehicle device and/or in the central server.

In step 210, a data transmission connection prevails between the RFID tag and the RFID reader and/or writer for carrying out the reading and/or writing operation. In step 220, there is established a wired or wireless data transmission connection between the RFID reader and/or writer and the vehicle device and/or a wireless connection between the central server. Typically the data transmission connection is wireless and compatible with GSM, GPRS, EDGE, WCDMA, CDMA, UMTS, TDMA, Bluetooth, Tetra, imode, WLAN, 3G or 4G. According to the invention, the central server can be any computer, but in certain embodiments for example a PC, Apple Macintosh, Unix, Linux, HPUX or a Solaris computer.

In practice, according to an embodiment, the central server is arranged to contact the RFID reader for transmitting data, in which case the RFID reader reads the tag and returns the data read from the tag to the central system. As an alternative, the vehicle device can carry out the reading of the data by collecting data for instance from all RFID readers included in the load or connected to the loading process, so that the collected data can be transmitted in a centralized fashion to the central system, either when the central system requests them, or as an alternative at the initiative of the vehicle device. According to an embodiment of the invention, the vehicle device is arranged to self-optimize said logistic arrangements for instance for defining the driving route, but as an alternative, the central data system can perform the route optimizing and transmit it to the vehicle device, to be further displayed to the driver.

In step 230, data is transmitted to the central server. The data to be transmitted typically refers to the state of the cargo and the goods. In addition to position and traveling speed, it is possible to transmit for example the weight of given goods, pressure caused by other goods, interference, vibration, the state of the doors, humidity data, temperature data, location data in the load space, position in the load space, operational history data and/or history data of the conditions of the goods. In step, 240 the central server sends a query to at least one RFID tag and/or RFID reader and/or writer. The query can relate to the state of a given item or the like, of which the central server requires additional information or retransmission. In certain embodiments of the invention, the step 240 can also be left undone. In that case the vehicle device can itself transmit data and collect data from the readers, to process the data itself and/or together with the central system.

In step 250, an optimal driving route is again defined for said vehicle. According to the invention, the definition of the driving route may take place completely in the central server, or certain parts of the definition can be processed on the server, or the definition of the whole route can be performed locally in the vehicle computer that in certain embodiments according to the invention is located in a mobile station, in an RFID reader and/or writer and/or in the vehicle device. In certain embodiments of the invention, the central server only collects and transmits data to the vehicle, which data also must be taken into account when defining the driving route. According to the invention, said data may refer for example to: weather, road traffic situation, alarms, weight limits, road tolls, height limits, exceptional speed limits, road works, road condition alarms, accidents, failed delivery assignments and/or new delivery assignments. In certain embodiments, the optimizing of the whole route is carried out in the server, by taking into account the above mentioned factors and the data transmitted from the vehicle. Now in step 260, there is transmitted the driving route or respective data to the vehicle device. With oversized transport assignments, with overweight transport, over high or wide-load transport, and in the case of the transport of hazardous or valuable materials, optimizing is extremely useful.

In step 270, transport data can according to the invention be transmitted to a third party and/or device. Said third party can in certain embodiments be for example the customs, other authorities, the police, a harbor gate, a logistics center, a transport company, a road service authority, the computer and/or mobile station of the person in charge, or an establishment collecting statistics and/or road tolls. In certain embodiments of the invention, it also is possible to follow the proceeding of the transportation through a data network, by observing Internet or Intranet pages, where the latest data of each item are updated.

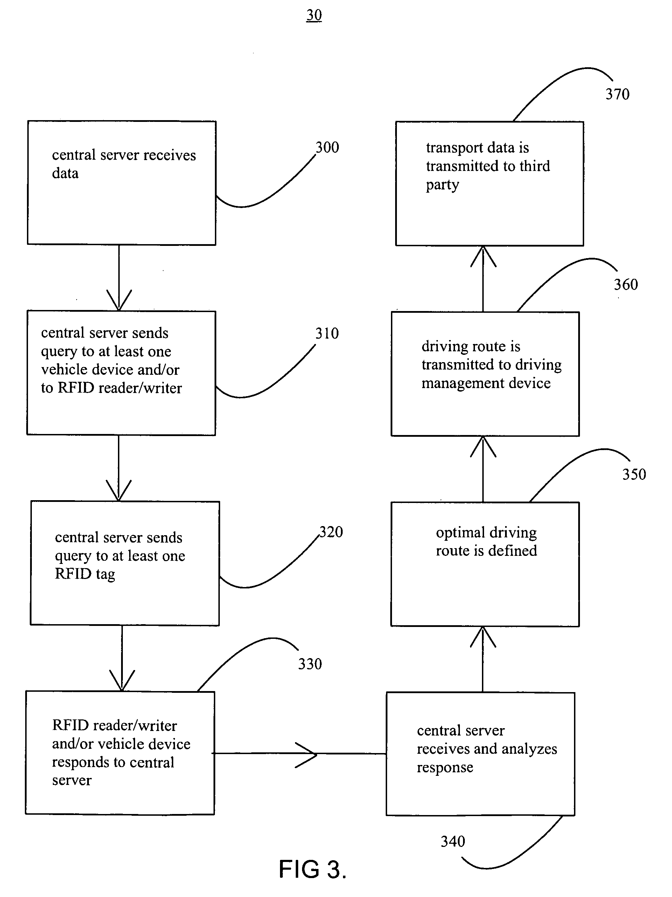

In step 300 of the method illustrated in Figure 3, the central server receives data. The central server can collect data for example from the Internet, from databases, customers and/or from said third parties according to the invention. Said data may relate for instance to weather, road traffic situation, alarms, weight limits, road tolls, height limits, exceptional speed limits, road works, road condition alarms, accidents, failed delivery assignments and/or new delivery assignments.

In step 310, the central server makes at least one query to at least one vehicle device and/or to an RFID reader and/or writer. According to the invention, the query can relate to any matter connected to the cargo or to a certain item. For example, the query can relate to the weight of a certain item or cargo, the pressure caused by other goods, interference, vibration, the state of the doors, humidity data, temperature data, location data in the load space, position in the load space, velocity, position data, operational history data and/or history data as regards the conditions of the goods in certain embodiments of the invention.

In step 320, the RFID reader and/or writer sends a query to a given RFID tag, typically only as regards given goods. Global queries, such as queries related to the vehicle speed, the RFID reader and/or writer or the vehicle device, the vehicle device responds itself in certain embodiments. In step 330, the RFID reader and/or writer and/or the vehicle device itself collects the given response data and the data collected by queries from the RFID tags and responds to the central server.

In step 340, the central server or the vehicle device receives and analyzes the response. In step 350, there is defined the future driving route of the vehicle on the basis of the data collected in step 300 and the data received in step 340. According to the invention, several route definition algorithms and criteria can be used. In step 360, the driving route is composed or communicated to the vehicle, to the vehicle device, through a wireless data transmission connection. Again, is in step 370 it is possible to transmit transport data to third parties and/or to devices according to the invention.

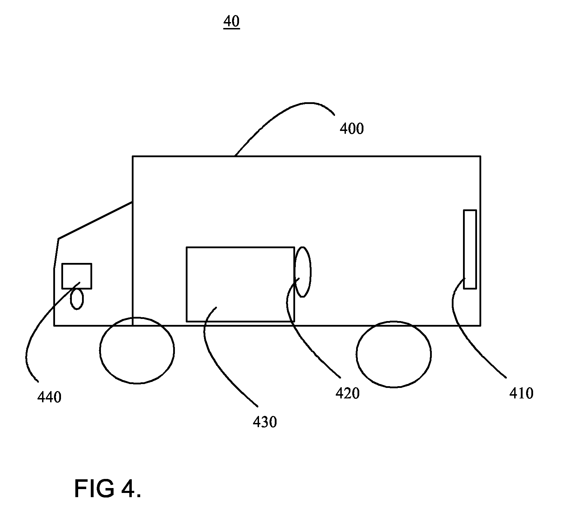

Figure 4 illustrates a vehicle arrangement according to the invention. In this case the vehicle 400 is a truck, but naturally the invention can be applied to boats, trains, cars, airplanes, motorcycles, scooters, bicycles or any other transport equipment. In the load space of the truck there is loaded cargo 430 provided with at least one RFID tag 420 attached thereto. In addition, the load is also provided with an RFID reader and/or writer 410 that can be for example attached to the load space of the truck 400, and in certain embodiments of the invention it can be a separate portable device.

According to the invention, the vehicle device 440 is typically located in the driver's cabin, but likewise the vehicle device can in certain embodiments be a portable device. It is for instance possible that the vehicle device 440 is realized as a PC, Apple Macintosh, Unix or Linux computer and/or as a mobile station. In certain embodiments the vehicle device 440 is realized as a mobile station that is compatible with GSM, GPRS, WCDMA, CDMA, UMTS, TDMA, Bluetooth, Tetra, imode, WLAN, 3G or 4G. It also is possible that the vehicle device 440 and the RFID reader and/or writer 410 are integrated in one device. The combination can also be a mobile station to which the RFID reader is integrated or connected.

When loading and/or unloading goods 430 in the load space, the RFID reader and/or writer 410 reads the outgoing and incoming goods by means of signals transmitted over the radio, whereafter it composes the inventory of the moment at hand. In certain embodiments the RFID reader and/or writer 410 transmits the information to the vehicle device 440 that makes a calculation of the inventory. When the position of the vehicle is known by satellite positioning, network positioning, and/or by the driver, it is also known where the vehicle is situated and what is the load. In addition, the driver knows the destinations of the goods, and/or the destinations are also readable in the respective RFID tags. On the basis of this data only, it is possible to plan routes to the destinations where the goods 430 are delivered. For optimizing the carrying capacity of the load space, there can be used scales installed in the vehicle itself, or the goods can be weighed by separate scales. The volume of the goods is obtained from the basic data of the goods to be transported. Thus the load space can be optimized according to the weight and/or volume, and a dynamic real-time control system of transportations and logistics can be achieved in this respect, too.

Moreover, it is possible that from the RFID tags or sensors, there can be read data such as: the weight of the goods, the pressure caused by other goods, interference, vibration, the state of the doors, humidity data, temperature data, location data in the load space, position in the load space, velocity, location data, operational history data and/or history data of the conditions of the goods, and this data or part thereof is arranged to be taken into account, when the route is composed in the vehicle device. Part of the data can be already stored in the RFID reader and/or the vehicle device and/or the central system.

Likewise, it is possible that the driver receives data from the radio and/or from a mobile station, which data is also fed into the vehicle device. Said data can relate to for example weather, road traffic situation, alarms, weight limits, road tolls, height limits, exceptional speed limits, speed limits, road works, road condition alarms, accidents, failed delivery assignments and/or new assignments, which are taken into account when generating the driving route according to the invention.

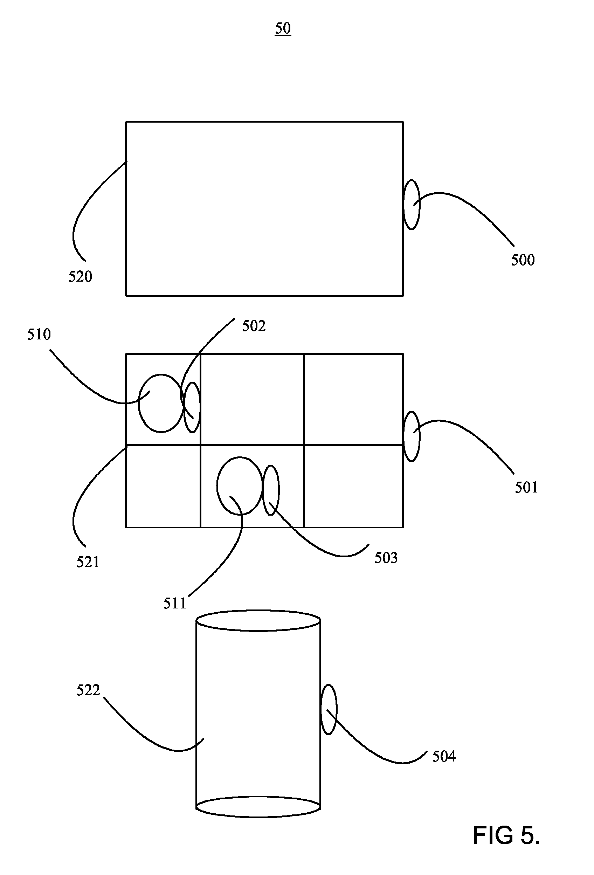

Figure 5 illustrates examples of how RFID tags can be used together with the goods to be transported. For instance, an RFID tag 500 is arranged to be attached directly to the item 520 or to the box thereof. Fastening methods such as sticker-like fastening, rivets, tapes, bands, nails, screws and adhesions are possible in the embodiments according to the invention, and it also is possible that RFID tags 502 and 503 are attached to the items 510, 511, in addition to which yet a separate RFID tag is attached to the transport box or container 521 of said items, which separate RFID tag serves as the RFID tag of the whole transport batch contained in said container.

Further, it is possible that a RFID tag 504 is attached to a tank 522 arranged for transporting oil, milk, oats, grain, waste, liquids or any other goods that is transported according to weight and/or volume. In certain embodiments of the invention, at least one RFID tag 504 is used for making an inventory based on weight and/or volume units at the loading and/or unloading points. In that case it is possible that the loading and/or unloading points are provided with scales and/or devices for measuring the volume, and/or respectively a sensor that measures the volume and/or weight is arranged in the RFID reader or tag 504. In some embodiments of the invention, the volume can be defined optically, for example by laser or by some other volume measurement methods.

According to an embodiment, the scales used in the weighing process is located in the vehicle itself, and the volume measurement can be arranged separately or connected to the scales, or the data can be obtained from the RFID tags 504 or it is already stored in the vehicle device and/or the central server. The scales installed in the vehicle can also be used for collecting and/or distribution based on weight. In that case for example a tank in which goods/liquids should be unloaded is identified by the RFID reader, and the batching is carried out by using the scales arranged in the vehicle. A similar procedure is followed in connection with collecting. On the basis of measurements carried out by scales and/or for instance optically realized volume measurements, a logistics management and optimizing system can be created. The collecting and optimizing of data, as well as the controlling of operations can be carried out in the vehicle device, in the central system or in both.

RFID readers can be connected to the vehicle device by wires or by wireless connections, such as GSM, GPRS, EDGE, WCDMA, CDMA, UMTS, TDMA, Bluetooth, Tetra, imode, WLAN, 3G or 4G connections. When the readers are directly connected to the central system, the communications are carried out through the same wireless connections.

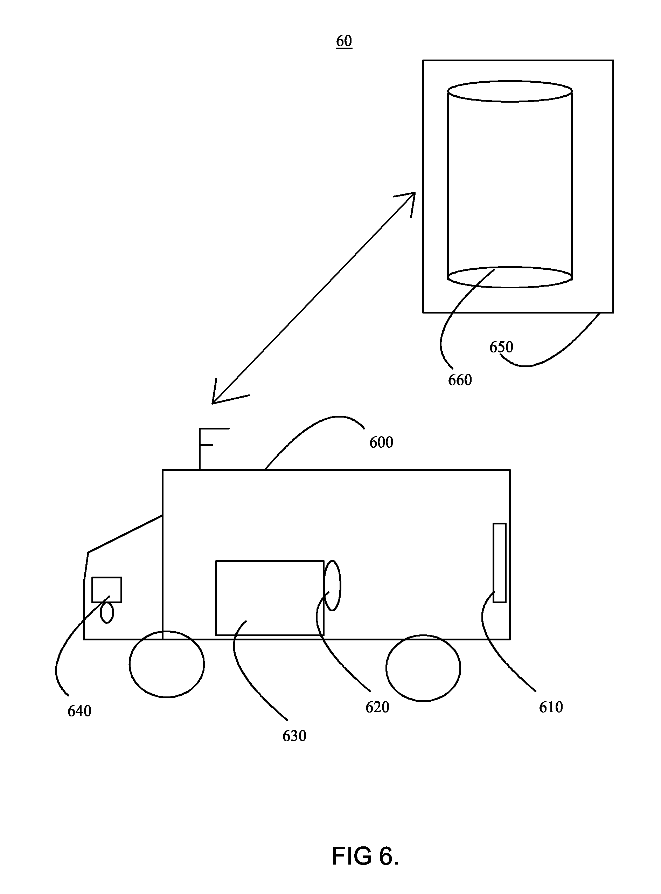

Figure 6 illustrates the cooperation of the transport vehicle 600 with the central server 650. In certain embodiments, the central server 650 is a PC, Apple Macintosh, Unix, Linux, HP-UX or Solaris computer, and it may include for example a database 660. Typically the central server 650 and the transport vehicle 600 are in a wireless data transmission connection, for instance in a data transmission connection compatible with GSM, GPRS, WCDMA, CDMA, UMTS, TDMA, Bluetooth, Tetra, imode, WLAN, 3G or 4G to the vehicle device 640, to the RFID reader and/or writer 610 and/or to the driver's mobile station.

The central server can be informed of matters related to the cargo, for example data read from the RFID tags 620. According to the invention, said data can be the weight of the goods, the pressure caused by other goods, interference, vibration, the state of the doors, humidity data, temperature data, location data in the load space, position in the load space, velocity, location data, operational history data and/or history data of the conditions of the goods. The data can also be measured by separate sensors and/or it can be completely or partly stored in the vehicle device and/or the central server in advance.

Moreover, it is possible that the central server 650 collects data and transmits said data further to the vehicle device 640, to the RFID reader and/or writer 610 and/or to the driver's mobile station. According to the invention, said data can be related to the weather, road traffic situation, alarms, weight limits, height limits, exceptional speed limits, road works, road condition alarms, accidents, road tolls, failed delivery assignments and/or new assignments that are taken into account when planning the driving route. Naturally the calculations performed when generating the driving route can be carried out by the vehicle device 640 and/or by the central server 650, and said means can be arranged to perform optimal route calculation iteratively, so that both devices transmit the required data to each other and thus compose an optimal route by taking into account a maximum number of factors that are useful for the optimizing process.

Obviously the vehicle 600 can be positioned by means of cellular network positioning or satellite positioning, or the driver can feed his position to the destination. In addition, within the scope of the invention it is possible that the central server can, when conditions change, change the assignments in real-time, also when the transport vehicle already is performing said assignments. According to the invention, a change in said assignments may be reflected in the optimal driving route. Generally the optimal route according to the invention means a route that causes the least monetary expenses and consumes the least amount of time and/or driving kilometers.

In certain embodiments according to the invention, the central server 650 is arranged to communicate transport data to a third party and/or device. In certain embodiments, the third party can be for example the customs, other authorities, the police, a harbor gate, a logistics center, a transport company, a road service authority, the computer and/or mobile station of a person in charge, or an institution collecting statistics and/or road tolls. In certain embodiments of the invention, there is provided a possibility to follow the proceeding of the transportation by intermediation of a data network, for example by observing Internet or Intranet pages, where the most recent data of each item are arranged to be updated.

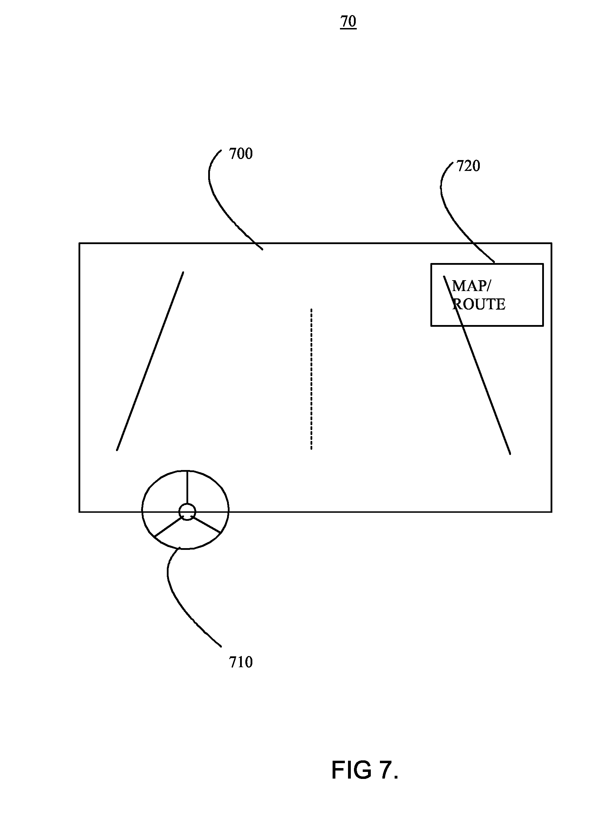

Figure 7 illustrates an exemplary embodiment of the vehicle device 720. In this embodiment, the vehicle device display is projected in the top or bottom corner of the windshield 700, where it does not disturb the driver from following the traffic, but is still conveniently visible all the time. Also speed limits and prevailing traffic signs can be displayed at the same time. Thus the driver can control the vehicle for example by the steering wheel 710 and view the map when necessary without failing to pay attention to the traffic. In certain embodiments the vehicle device is a PC, Apple Macintosh, Unix or Linux computer and/or a mobile station. The driving route can be displayed on a separate display attached to the windshield 700, or it can be projected for example by a projector. Within the scope of the invention, it is likewise possible that the vehicle device comprises a separate monitor, a plasma display, a liquid crystal display and/or some other display. Moreover, it is possible that the vehicle device is arranged to display the driving route in the TV and/or mobile station of the vehicle or of the driver.

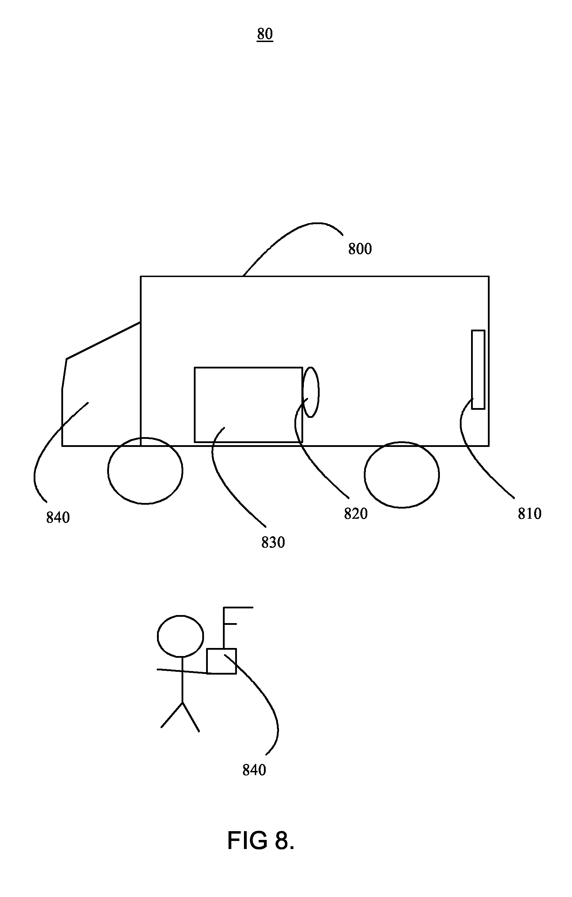

Figure 8 illustrates an embodiment of the invention where the vehicle device 840 is a portable mobile station, by which the driver can control the transport process, even when the vehicle is stopped and he himself is out of the vehicle. In some embodiments, the driver can for example check the state of the load space by sending a query through the radio to the RFID reader/writer 810 also when he himself is for example in a hotel. Moreover, in certain embodiments the driver can also view his future driving route in the mobile station 840. In some embodiments, the RFID reader/writer 810 and the vehicle device 840 are integrated as one mobile station. In that case the driver can in the loading and/or unloading points continuously follow the dynamic inventory of the load space and intervene in possible error situations before continuing the trip. The system can also give and alarm, in case everything that should was not left or taken along at the unloading/loading point. When the system contains data telling what should be left where and what should be collected where, the general efficiency can be improved and errors can be eliminated by means of the overall system described above.

In the above specification, the invention is described with reference to the appended embodiments, and several commercial and industrial advantages of the invention are enlisted. The methods and devices according to the invention enable a dynamic management of goods transportation at each point of time, based on real-time inventory data. The method and system according to the invention measures the overall logistic situation and translates each transport situation into comprehensively optimized operational instructions that can be executed immediately. The method and system according to the invention make it possible for the transport operations to rapidly react to external changes by concrete operational instructions, for example driving instructions or a driving route. In particular, by means of the invention it is possible to optimize the available volume and the carrying capacity of the transport means meant for transporting the goods, as well as the versatility of the types of goods accepted to be transported, because the invention offers real-time data of the carrying capacity and volume of the transport means as well as of the cargo already loaded in the load space. Thus it can be rapidly and easily optimized what kind of goods can be loaded more, and to what extent. In addition, the suitability of the goods in the same load space can be effectively taken into account. Further, by utilizing the weight and/or volume data, the use of the load space can be dynamically optimized, and the invoicing grounds can be obtained automatically.

In the above specification, the invention is explained with reference to the appended embodiments. However, it is apparent that the invention is not restricted to said embodiments only, but includes all embodiments within the scope of the inventive idea and spirit of the invention, as well as the appended claims.

## Claims

1. A method for managing logistics in a transport network of goods (430, 510, 511, 520, 630, 830), said method comprising a driver's vehicle device (440, 640, 720, 840), at least one RFID tag (420, 500, 501, 502, 503, 504, 620, 820), and at least one RFID reader and/or writer (410, 610, 810), **characterized in that**:
- at least one RFID tag is connected to at least one item to be transported(100),
- there is generated real-time data (120) connected to the goods to be transported and to their destination by reading and/or writing the RFID tags of the goods to be transported,
- on the basis of the data connected to said goods to be transported, to their location and destination, there is composed a driving route (130) for the driver, which driving route is displayed on the vehicle device (140).

2. A method according to claim 1, **characterized in that** said real-time data is generated when loading/unloading the goods to be transported.

3. A method according to claim 1, **characterized in that** at least one RFID tag (420, 500, 501, 502, 503, 504, 620, 820) is connected to at least one item to be transported (430, 510, 511, 520, 630, 830), to a goods tank (522), container (521), or vessel containing given goods to be transported (521, 522), or to the driver, loader or caretaker of the goods to be transported, and/or to their clothes, protective gear, tools and/or processing means.

4. A method according to claim 1, **characterized in that** at least two of the following are arranged in mutual wireless data transmission connection: the vehicle device, the RFID reader and/or writer (440, 640, 720, 840) and the central server (220, 310, 650).

5. A method according to claim 1, **characterized in that** the vehicle device (440, 640, 720, 840) is a driving computer comprising a display that is shown on a certain part of the windshield (700), projected by a projector on a given surface in the vehicle driver's cabin and/or is realized in the cabin by a monitor.

6. A method according to claim 1, **characterized in that** the RFID tags (420, 500, 501, 502, 503, 504, 620, 820) record, as regards the respective goods (430, 510, 511, 520, 630, 830), their weight, the pressure caused by other goods, interference, vibration, the state of the doors, humidity data, temperature data, their location data in the load space, their position in the load space, their velocity, their position data, the history data of previous operations and/or the history data of the goods conditions.

7. A method according to claim 1, **characterized in that** at least part of the following data is recorded in the vehicle device and/or in the central server, to be unambiguously associated with an RFID tag (420, 500, 501, 502, 503, 504, 620, 820) connected to a given item to be transported (430, 510, 511, 520, 630, 830): weight, pressure caused by other goods, interference, vibration, the state of the doors, humidity data, temperature data, location data in the load space, position in the load space, velocity, position data, history data of previous operations and history data of goods conditions.

8. A method according to claim 1, **characterized in that** other factors, such as weather, road traffic situation, alarms, weight limits, road tolls, height limits, exceptional speed limits, road works, road condition alarms, accidents, failed delivery assignments, new assignments, the fastest and/or the most cost-effective route are taken into account when composing the driving route.

9. A method according to claim 1, **characterized in that** in connection with loading and unloading, the goods (430, 510, 511, 520, 630, 830) are weighed, and by means of the RFID tags (420, 500, 501, 502, 503, 504, 620, 820), there is applied an inventory defined by units of weight.

10. A method according to claim 1, **characterized in that** the driving routes, the data connected to the goods to be transported, their location and the destination of the goods are communicated (230) to the central server (650), and from the central server, the operations of the vehicle and/or the driver are controlled by additional instructions (260, 360).

11. A method according to claim 1, **characterized in that** the data related to at least one item of given goods (430, 510, 511, 520, 630, 830) is communicated to at least one central server (230, 330, 650) and/or that at least one central server and/or vehicle device requests (320) the data related to the state of at least one item of given goods (430, 510, 511, 520, 630, 830) and/or tank (521, 522).

12. A method according to claim 1, **characterized in that** the vehicle device (440, 640, 720, 840) is a PC, Windows, CE, Apple Macintosh, Unix or Linux computer and/or a vehicle terminal and/or a palm computer and/or a mobile station and/or some other information technology device.

13. A method according to claim 1, **characterized in that** the vehicle device (440, 640, 720, 840) and the RFID reader and/or writer (410, 610, 810) are integrated in one and the same portable or stationary device.

14. A method according to claim 1 and 4, **characterized in that** the central server (650), the vehicle device (440, 640, 720, 840) and/or the RFID reader and/or writer (410, 610, 810) transmit transport data to a third party (270, 370).

15. A method according to claim 1, **characterized in that** the data connected to the goods to be transported is based on numbers of items, units of weight and/or units of volume.

16. An arrangement for managing logistics in a transport network of goods (430, 510, 511, 520, 630, 830), said arrangement comprising a vehicle device (440, 640, 720, 840) for the driver of the vehicle, at least one RFID tag (420, 500, 501, 502, 503, 504, 620, 820), and at least one RFID reader and/or writer (410, 610, 810), **characterized in that**:
- at least one RFID tag is connected to at least one item to be transported,
- the arrangement comprises means for reading and/or writing the RFID tags of the goods to be transported, as well as means for generating real-time data connected to the goods to be transported and their destination,
- on the basis of the data, location and destination of said goods to be transported, the arrangement comprises means for composing a driving route for the driver, which driving route is arranged to be displayed on the vehicle device.

17. An arrangement according to claim 16, **characterized in that** at least one RFID tag (420, 500, 501, 502, 503, 504, 620, 820) is connected to at least one item to be transported (430, 510, 511, 520, 630, 830), to a goods tank (522), container (521), or vessel (521, 522) containing given goods to be transported, or to the driver, loader or caretaker of the goods to be transported and/or to their clothes, protective gear, tools and/or processing means.

18. An arrangement according to claim 16, **characterized in that** at least two of the following are arranged in a mutual wireless data transmission connection: the vehicle device (440, 640, 720, 840), the RFID reader and/or writer (410, 610, 810) and the central server (650).

19. An arrangement according to claim 16, **characterized in that** the RFID reader is arranged in connection with at least one of the following equipment: transport, transmission and loading equipment.

20. An arrangement according to claim 16, **characterized in that** the RFID reader includes a monitoring feature for detecting vibration and/or motion, and is also arranged to perform at least one of the following: giving alarm to the vehicle device or to the central system, starting the RFID reading, and starting the positioning operation.

21. An arrangement according to claim 16, **characterized in that** the vehicle device (440, 640, 720, 840) is a driving computer comprising a display that is displayed on a certain part of the windshield (700), projected by a projector on a certain surface in the driver's cabin and/or is realized in the cabin by a monitor.

22. An arrangement according to claim 16, **characterized in that** the RFID tags (420, 500, 501, 502, 503, 504, 620, 820) are arranged to record, as regards the respective goods (430, 510, 511, 520, 630, 830), their weight, the pressure caused by other goods, interference, vibration, the state of doors, humidity data, temperature data, location data in the load space, position in the load space, their velocity, location data, the operational history data and/or the history data related to the conditions of the goods.

23. An arrangement according to claim 16, **characterized in that** at least part of the following data is arranged to be recorded in the vehicle device and/or in the central server to be unambiguously associated with the RFID tag (420, 500, 501, 502, 503, 504, 620, 820) of a given item to be transported (430, 510, 511, 520, 630, 830): weight, pressure caused by other goods, interference, vibration, the state of the doors, humidity data, temperature data, location data in the load space, position in the load space, velocity, location data, operational history data and history data related to the conditions of the goods.

24. An arrangement according to claim 16, **characterized in that** other factors, such as weather, road traffic situation, alarms, weight limits, road tolls, height limits, exceptional speed limits, road works, road condition alarms, accidents, failed delivery assignments, new assignments, the fastest and/or most cost-effective route is arranged to be taken into account when composing the driving route.

25. An arrangement according to claim 16, **characterized in that** the arrangement comprises at least one unit of scales, which can be located at the loading and/or unloading point and/or in the vehicle, and that in connection with loading and unloading the goods (430, 510, 511, 520, 630, 830) and/or tanks (521, 522) are weighed, and by means of RFID devices (420, 500, 501, 502, 503, 504, 620, 820) there is applied an inventory defined by units of weight.

26. An arrangement according to claim 16, **characterized in that** driving routes, data connected to the goods to be transported, their location and/or destination are communicated to a central server (650), and that the central server is provided with a possibility to control the operations of the vehicle and the driver by additional instructions.

27. An arrangement according to claim 16, **characterized in that** the arrangement comprises means for transmitting data related to the state of at least one item of given goods (430, 510, 511, 520, 630, 830) and/or one tank (521, 522) to at least one central server (650), and/or that at least one central server and/or vehicle device (440, 640, 720, 840) comprises means for requesting data related to the state of at least one item of given goods from at least one RFID tag and/or sensors (420, 500, 501, 502, 503, 504, 620, 820) through data transmission connections.

28. An arrangement according to claim 16, **characterized in that** the vehicle device (440, 640, 720, 840) is a PC, an Apple Macintosh, Unix or Linux computer and/or a mobile station.

29. An arrangement according to claim 16, **characterized in that** the vehicle device (440, 640, 720, 840) and the RFID reader and/or writer (410, 610, 810) are integrated in one and the same portable or stationary device.

30. An arrangement according to claim 16 and 18, **characterized in that** the central server (650), the vehicle device (440, 640, 720, 840) and/or the RFID reader and/or writer (410, 610, 810) comprise means for transmitting transport data to a third party.

31. An arrangement according to claim 16, **characterized in that** the data connected to the goods to be transported is arranged by numbers of items, units of weight and/or by units of volume.

32. An arrangement according to claim 16, **characterized in that** the arrangement is arranged to observe the mutual compatibility of the goods to be loaded in the same loading space as well as to make an alarm, in case goods that are not mutually compatible are attempted to be put in the same space.

33. An arrangement according to claim 16, **characterized in that** at least one of the following means is arranged to notify in real-time the receiver of the goods to be transported of the arrival or call for the goods either in advance, at the moment of operation or afterwards for example through the Internet, email, mail, fax, SMS, MMS message, voice message or by mobile stations: the central system, the vehicle device, or the RFID reader.
